# EUROPÄISCHE PATENTSCHRIFT

(11) **EP 2 154 022 B1**
(45) Veröffentlichungstag und Bekanntmachung des Hinweises auf die Patenterteilung: **03.08.2011**
(21) Anmeldenummer: 09010141.1
(22) Anmeldetag: 06.08.2009
(51) Int. Cl.: B60P 3/14

(54) **Mobile Werkbank**
Mobile workbench
Banc mobile

(30) Priorität: 11.08.2008 DE 102008037191
(43) Veröffentlichungstag der Anmeldung: 17.02.2010
(73) Patentinhaber: Müller, Thomas, 39638 Gardelegen (DE)
(72) Erfinder: Müller, Thomas, 39638 Gardelegen (DE)
(74) Vertreter: Schuster, Müller & Partner

(56) Entgegenhaltungen:
- DE-A1- 3 809 919
- US-A- 4 756 500
- US-A- 5 823 595
- US-A1- 2001 048 268
- US-A1- 2003 075 943
- US-B1- 6 467 417
- US-B1- 7 032 425

## Beschreibung

### Stand der Technik

Die Erfindung geht aus von einer mobilen Werkbank, nach der Gattung des Anspruchs 1.

Werkbänke finden schon seit langer Zeit Verwendung in Werkstätten, in denen sie in der Regel fest montiert sind. Um den Einsatzbereich zu erweitern, sind mobile Werkbänke auf dem Markt, die beispielsweise auf eine Baustelle transportiert werden. Ein Nachteil ist, dass sie am Einsatzort erst umständlich aufgebaut werden müssen, bevor sie zum Einsatz kommen. Zudem ist je nach Untergrund die notwendige Standfestigkeit problematisch, da leichte Ausführungen von herkömmlichen Werkbänken zum Umkippen tendieren und andere herkömmlichen Werkbänken mit besserer Standfestigkeit sperrig bzw. schwer sind.

In der US-Patentschrift 7,032,425 B1 und der US-Patentanmeldung US 2001/0048268 A1 werden jeweils eine mobile Werkbank beschrieben, die an einer Ladefläche eines Anhängers oder eines Fahrzeuges montiert ist und aus einer Arbeitsstellung in eine Transportstellung bewegbar ist. Nachteilig ist hierbei, dass die mobile Werkbank in der Transportstellung oberhalb des Laderaums angeordnet ist, so dass sich der Schwerpunkt des Fahrzeuges oder des Anhängers ungünstig nach oben verlagert.

### Die Erfindung und ihre Vorteile

Die erfindungsgemäße mobile Werkbank, mit den kennzeichnenden Merkmalen des Anspruchs 1, hat demgegenüber den Vorteil, dass die Arbeitsplatte, die mittels einer Befestigungsvorrichtung aus einer Transportstellung in eine Arbeitsstellung verschwenkbar ist, wobei die Befestigungsvorrichtung mittels Befestigungsmitteln an ihrem einen Ende gelenkig an der Arbeitsplatte und an ihrem anderen Ende gelenkig an einer die offene Ladefläche begrenzenden Wand befestigt ist, wobei, um in der Transportstellung den Schwerpunkt des Fahrzeuges oder des Anhängers nicht ungünstig zu verlagern, in der Transportstellung die Wand zumindest teilweise zwischen der Arbeitsplatte und der Befestigungsvorrichtung angeordnet ist.

Bevorzugt ist die erfindungsgemäße mobile Werkbank schnell abnehmbar (lösbar) und wieder montierbar.

Die erfindungsgemäße mobile Werkbank ist sowohl auf Baustellen als auch z.B. im landwirtschaftlichen Bereich einsetzbar.

Besonders vorteilhaft ist, dass die erfindungsgemäße mobile Werkbank auch für großflächige Werkstücke (z.B. Türen, Zaunfelder, odgl.) geeignet ist. Außerdem ist die Aufstellung der erfindungsgemäßen mobilen Werkbank von der Bodenbeschaffenheit (z.B. Neigung oder Tragfähigkeit des Geländes) unabhängig.

Nach einer vorteilhaften Ausgestaltung der erfindungsgemäßen mobilen Werkbank ist die Arbeitsplatte in ihrer Transportstellung innerhalb der offenen Ladefläche (bevorzugt senkrecht) angeordnet.

Nach einer zusätzlichen vorteilhaften Ausgestaltung der erfindungsgemäßen mobilen Werkbank überragt die Arbeitsplatte in ihrer Transportstellung die die offene Ladefläche begrenzende Wand.

Nach einer zusätzlichen vorteilhaften Ausgestaltung der erfindungsgemäßen mobilen Werkbank stützt die Befestigungsvorrichtung die in der Arbeitsposition befindliche Arbeitsplatte (auch unabhängig von der Bodenbeschaffenheit z.B. Sand, Geröll).

Nach einer zusätzlichen vorteilhaften Ausgestaltung der erfindungsgemäßen mobilen Werkbank stützt die Befestigungsvorrichtung die in der Arbeitsposition befindliche Arbeitsplatte von unten.

Nach einer zusätzlichen vorteilhaften Ausgestaltung der erfindungsgemäßen mobilen Werkbank liegt die in der Arbeitsposition befindliche Arbeitsplatte auf der Wand, an der die Befestigungsvorrichtung angelenkt ist, auf.

Nach einer vorteilhaften Ausgestaltung der erfindungsgemäßen mobilen Werkbank weist die Befestigungsvorrichtung mindestens eine Strebe auf.

Nach einer zusätzlichen vorteilhaften Ausgestaltung der erfindungsgemäßen mobilen Werkbank ist die die offene Ladefläche begrenzende Wand eine Außenwand.

Nach einer zusätzlichen vorteilhaften Ausgestaltung der erfindungsgemäßen mobilen Werkbank ist das an der Arbeitsplatte und/oder an der die offenen Ladefläche begrenzende Wand angeordnete Befestigungsmittel lösbar mit der Befestigungsvorrichtung verbunden.

Nach einer diesbezüglichen vorteilhaften Ausgestaltung der erfindungsgemäßen mobilen Werkbank weist die Arbeitsplatte mindestens eine Haltevorrichtung für handelsübliche Maschinen, einen Schraubstock, odgl. auf.

Weitere Vorteile und vorteilhafte Ausgestaltungen der Erfindung sind der nachfolgenden Beschreibung, der Zeichnung und den Ansprüchen entnehmbar.

### Zeichnung

Ein Ausführungsbeispiel des Gegenstandes der Erfindung ist in der Zeichnung dargestellt und wird im Folgenden näher erläutert. Es zeigen:
- Fig. 1: eine perspektivische Ansicht einer erfindungsgemäßen mobilen Werkbank in Transportstellung,
- Fig. 2: eine perspektivische Ansicht einer erfindungsgemäßen mobilen Werkbank in Arbeitsstellung und
- Fig. 3: eine weitere perspektivische Ansicht einer erfindungsgemäßen mobilen Werkbank in Arbeitsstellung.

### Beschreibung des Ausführungsbeispiels

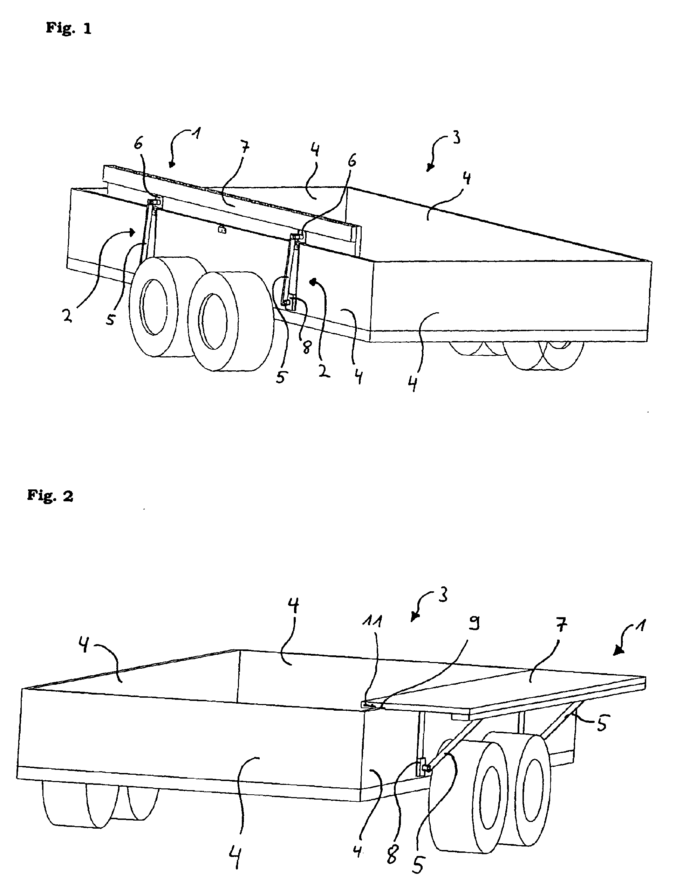

Fig. 1 zeigt eine perspektivische Ansicht einer erfindungsgemäßen mobilen Werkbank 1 in Transportstellung, die über eine Befestigungsvorrichtung 2 an einem Anhänger 3, der eine durch Wände 4 begrenzte offene Ladefläche aufweist, fixiert ist. Die Befestigungsvorrichtung 2, die bevorzugt aus einer Strebe 5 besteht, ist mittels Befestigungsmitteln 6 (z.B. Gelenkbolzen) gelenkig an der Arbeitsplatte 7 und mittels Befestigungsmitteln 8 (z.B. Gelenkbolzen) gelenkig an einer die offene Ladefläche begrenzenden Wand 4 befestigt. Denkbar ist auch, dass die Befestigungsmittel 6 und/oder die Befestigungsmittel 8 nicht direkt an der Arbeitsplatte 7 bzw. der Wand 4 fixiert sind, sondern diese beispielsweise als Schlitten auf einer Schiene verschiebbar angeordnet sind. Bevorzugt sind die Befestigungsmittel 6 und/oder die Befestigungsmittel 8 (z.B. durch Sicherungsstifte) lösbar mit der Strebe 5 verbunden, so dass eine einfache Demontage der erfindungsgemäßen mobilen Werkbank 1 ermöglicht wird. Die in der Transportstellung Platz sparend an der Bordwandinnenseite positionierte Arbeitsplatte 7 ist bevorzugt höher als die Bordwand, so dass dadurch gegebenenfalls die Ladekapazität des Anhängers 3 erhöht wird. Selbstverständlich ist es auch denkbar, dass an dem Anhänger 3 noch weitere erfindungsgemäße mobile Werkbänke 1 angeordnet sind.

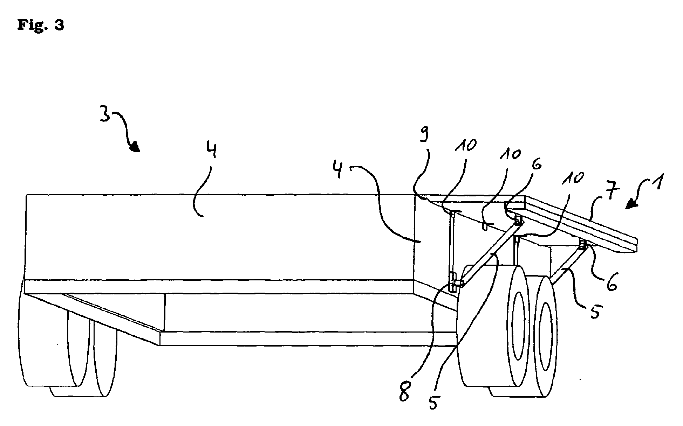

Fig. 2 und Fig. 3 zeigen je eine perspektivische Ansicht einer erfindungsgemäßen mobilen Werkbank 1 in Arbeitsstellung (waagerechte Position der Arbeitsplatte 7). Um die Arbeitsstellung zu erreichen, wird die Arbeitsplatte 7 aus der in Fig. 1 dargestellten Transportstellung (senkrechte Position der Arbeitsplatte 7) um die Längsachse gedreht. In der Arbeitsstellung, in der sich die erfindungsgemäße mobile Werkbank 1 in einer für den Anwender optimalen Arbeitshöhe befindet, wird der vordere Bereich der Arbeitsplatte 7 durch die Streben 5 abgestützt. Zusätzlich liegt die Arbeitsplatte 7 auf der Wand 4 auf. Die Arbeitsplatte 7 weist an ihrer Unterseite eine Nut 9 auf, in die die Wand 4 des Anhängers 3, dessen Deichsel zur Vereinfachung nicht dargestellt ist, zur Erhöhung der Stabilität einführbar ist, so dass die Arbeitsplatte 7 auf der Oberkante der Wand 4 aufliegt. Bevorzugt wird die Arbeitsplatte 7 in dieser Position mit mindestens einem Sicherungsmittel 10 (z.B. Splint, Stift, Bolzen, odgl.) gesichert, so dass die Arbeitsplatte 7 an der Wand 4 (lösbar) befestigt ist.

Sollen lange Werkstücke auf der erfindungsgemäßen mobilen Werkbank 1 bearbeitet werden, dienen die Wände 4, an denen die erfindungsgemäße mobile Werkbank 1 nicht montiert ist, als Auflage. Dadurch ist auch das Bearbeiten großer, langer und/oder schwerer Werkstücke unter Gewährleistung eines sicheren Standes der erfindungsgemäßen mobilen Werkbank 1 möglich.

An der erfindungsgemäßen mobilen Werkbank 1, die leicht an jeden herkömmlichen Anhänger 3 oder an jedes herkömmliche Fahrzeug nachrüstbar ist und die, da ein Anhänger 3 oder ein Fahrzeug als Untergestell dient auch in ihrer Arbeitsstellung gegebenenfalls leicht von einem Standort zum nächsten Standort bewegt werden kann, kann ein Schraubstock und/oder handelsübliche Maschinen, wie z.B. elektrische Hobel, Kappsäge, Säge- und Bohrmaschinen, angeordnet werden, so dass die erfindungsgemäße mobile Werkbank 1 neben der Anwendung als mobiler Arbeitsplatz für handwerkliche Tätigkeiten auch als Träger von handelsüblichen Maschinen dienen kann. Bevorzugt findet die Anordnung der handelsüblichen Maschinen derart statt, dass sie den Mechanismus der erfindungsgemäßen mobilen Werkbank 1 nicht beeinträchtigen und auch in deren Transportstellung an der Arbeitsplatte angeordnet bleiben können. Denkbar ist auch, dass, um Werkstücke auch mittig an der Arbeitsplatte 7 fest spannen zu können, an der Arbeitsplatte 7 entsprechende Bohrungen für Spannwerkzeuge, wie z.B. Schraubzwingen angeordnet sind. In der Transportstellung dienen diese Bohrungen bevorzugt zur Sicherung und Verzurrung der Ladung, da beispielsweise Spanngurte oder Sicherungsnetze durch diese Bohrungen geführt werden können. Bevorzugt sind die Bohrungen bzw. die erfindungsgemäße Werkbank 1 abdeckbar (z.B. Plane, Pappe, odgl.), damit z.B. beim Transport von Sand nichts durch diese Bohrungen "fließt".

Bevorzugt weist die erfindungsgemäße Werkbank 1 mindestens ein Befestigungsmittel 11 (z.B. Riegel, odgl.) auf, mit dem die erfindungsgemäße Werkbank 1 in der Transportstellung z.B. an der Bodenplatte des Anhängers (z.B. Einachsanhänger, Tandemanhänger, Zweiachsanhänger) oder des Fahrzeuges zusätzlich gesichert werden kann.

Alle hier dargestellten Merkmale können sowohl einzeln als auch in beliebiger Kombination miteinander erfindungswesentlich sein.

### Bezugszahlenliste

- 1: Mobile Werkbank
- 2: Befestigungsvorrichtung
- 3: Anhänger
- 4: Wand
- 5: Strebe
- 6: Befestigungsmittel
- 7: Arbeitsplatte
- 8: Befestigungsmittel
- 9: Nut
- 10: Sicherungsmittel (Befestigungsmittel)
- 11: Befestigungsmittel

## Patentansprüche

1. Mobile Werkbank (1),
- mit einer Arbeitsplatte (7) und
- mit einer Befestigungsvorrichtung (2) zur Befestigung der Arbeitsplatte (7) an einem auf einem Untergrund abgestützten Gestells, wobei die Arbeitsplatte (7) mittels der Befestigungsvorrichtung (2) aus einer Transportstellung in eine Arbeitsstellung verschwenkbar ist,
**dadurch gekennzeichnet,**
**dass** das Gestell ein Anhänger (3) mit einer offenen Ladefläche oder ein Fahrzeug mit einer offenen Ladefläche ist und
**dass** die Befestigungsvorrichtung (2) mittels Befestigungsmitteln (6, 8) an ihrem einen Ende gelenkig an der Arbeitsplatte (7) und an ihrem anderen Ende gelenkig an eine die offene Ladefläche begrenzenden Wand (4) befestigban ist, wobei in der Transportstellung die Wand (4) zumindest teilweise zwischen der Arbeitsplatte (7) und der Befestigungsvorrichtung (2) angeordnet ist.

2. Mobile Werkbank (1), nach Anspruch 1, **dadurch gekennzeichnet, dass** die Arbeitsplatte (7) in ihrer Transportstellung innerhalb der offenen Ladefläche angeordnet ist.

3. Mobile Werkbank (1), nach Anspruch 1 oder Anspruch 2, **dadurch gekennzeichnet, dass** die Arbeitsplatte (7) in ihrer Transportstellung die die offene Ladefläche begrenzende Wand (4) überragt.

4. Mobile Werkbank (1), nach einem der vorhergehenden Ansprüche, **dadurch gekennzeichnet, dass** die Befestigungsvorrichtung (2) die in der Arbeitsposition befindliche Arbeitsplatte (7) stützt.

5. Mobile Werkbank (1), nach einem der vorhergehenden Ansprüche, **dadurch gekennzeichnet, dass** die Befestigungsvorrichtung (2) die in der Arbeitsposition befindliche Arbeitsplatte (7) von unten stützt.

6. Mobile Werkbank (1), nach einem der vorhergehenden Ansprüche, **dadurch gekennzeichnet, dass** die in der Arbeitsposition befindliche Arbeitsplatte (7) auf der Wand (4), an der die Befestigungsvorrichtung (2) angelenkt ist, aufliegt.

7. Mobile Werkbank (1), nach einem der vorhergehenden Ansprüche, **dadurch gekennzeichnet, dass** die Befestigungsvorrichtung (2) mindestens eine Strebe (5) aufweist.

8. Mobile Werkbank (1), nach einem der vorhergehenden Ansprüche, **dadurch gekennzeichnet, dass** die die offene Ladefläche begrenzende Wand (4) eine Außenwand ist.

9. Mobile Werkbank (1), nach einem der vorhergehenden Ansprüche, **dadurch gekennzeichnet, dass** das an der Arbeitsplatte (7) und/oder an der die offenen Ladefläche begrenzende Wand (4) angeordnete Befestigungsmittel (6, 8) lösbar mit der Befestigungsvorrichtung (2) verbunden ist.

10. Mobile Werkbank (1), nach einem der vorhergehenden Ansprüche, **dadurch gekennzeichnet, dass** die Arbeitsplatte (7) mindestens eine Haltevorrichtung für handelsübliche Maschinen, einen Schraubstock, odgl. aufweist.

## Claims

1. Mobile workbench (1),
- with a worktop (7) and
- with a fastening device (2) for fastening the worktop (7) to a frame which is supported on a substrate, wherein the worktop (7) is able to be swivelled by means of the fastening device (2) from a transportation position into a working position,
**characterized in that**
the frame is a trailer (3) with an open loading surface or a vehicle with an open loading surface and that the fastening device (2) is able to be fastened by means of fastening means (6, 8) at its one end articulatedly to the worktop (7) and at its other end articulatedly to a wall (4) delimiting the open loading surface, wherein in the transportation position the wall (4) is at least partially arranged between the worktop (7) and the fastening device (2).

2. Mobile workbench (1) according to Claim 1, **characterized in that** the worktop (7) in its transportation position is arranged within the open loading surface.

3. Mobile workbench (1) according to Claim 1 or Claim 2, **characterized in that** the worktop (7) in its transportation position projects over the wall (4) delimiting the open loading surface.

4. Mobile workbench (1) according to one of the preceding claims, **characterized in that** the fastening device (2) supports the worktop (7) situated in the working position.

5. Mobile workbench (1) according to one of the preceding claims, **characterized in that** the fastening device (2) supports from below the worktop (7) situated in the working position.

6. Mobile workbench (1) according to one of the preceding claims, **characterized in that** the workbench (7) situated in the working position rests on the wall (4) on which the fastening device (2) is articulated.

7. Mobile workbench (1) according to one of the preceding claims, **characterized in that** the fastening device (2) has at least one strut (5).

8. Mobile workbench (1) according to one of the preceding claims, **characterized in that** the wall (4) delimiting the open loading surface is an outer wall.

9. Mobile workbench (1) according to one of the preceding claims, **characterized in that** the fastening means (6, 8) arranged on the worktop (7) and/or on the wall (4) delimiting the open loading surface, is detachably connected with the fastening device (2).

10. Mobile workbench (1) according to one of the preceding claims, **characterized in that** the worktop (7) has at least one holding device for commercially available machines, a bench vice, or suchlike.

## Revendications

1. Banc mobile (1),
- comprenant un plateau de travail (7) et
- comprenant un dispositif de fixation (2) pour fixer le plateau de travail (7) sur un bâti appuyé sur un fond, sachant que le plateau de travail (7) est pivotable d'une position de transport à une position de travail au moyen du dispositif de fixation (2),
**caractérisé en ce que**
le bâti est une remorque (3) comprenant une surface de chargement ouverte ou un véhicule comprenant une surface de chargement ouverte et que le dispositif de fixation (2) peut être fixé par des moyens de fixation (6, 8) sur l'une de ses extrémités de manière articulée au plateau de travail (7) et sur son autre extrémité de manière articulée à une paroi (4) délimitant la surface de chargement ouverte, sachant que dans la position de transport, la paroi (4) est disposée au moins partiellement entre le plateau de travail (7) et le dispositif de fixation (2).

2. Banc mobile (1) selon la revendication 1, **caractérisé en ce que** dans sa position de transport, le plateau de travail (7) est disposé à l'intérieur de la surface de chargement ouverte.

3. Banc mobile (1) selon la revendication 1 ou 2, **caractérisé en ce que** dans sa position de transport, le plateau de travail (7) fait saillie de la paroi (4) délimitant la surface de chargement ouverte.

4. Banc mobile (1) selon l'une des revendications précédentes, **caractérisé en ce que** le dispositif de fixation (2) soutient le plateau de travail (7) se trouvant dans la position de travail.

5. Banc mobile (1) selon l'une des revendications précédentes, **caractérisé en ce que** le dispositif de fixation (2) soutient par le bas le plateau de travail (7) se trouvant dans la position de travail.

6. Banc mobile (1) selon l'une des revendications précédentes, **caractérisé en ce que** le plateau de travail (7) se trouvant dans la position de travail repose sur la paroi (4) sur laquelle le dispositif de fixation (2) est articulé.

7. Banc mobile (1) selon l'une des revendications précédentes, **caractérisé en ce que** le dispositif de fixation (2) présente au moins une potence (5).

8. Banc mobile (1) selon l'une des revendications précédentes, **caractérisé en ce que** la paroi (4) délimitant la surface de chargement ouverte est une paroi extérieure.

9. Banc mobile (1) selon l'une des revendications précédentes, **caractérisé en ce que** les moyens de fixation (6, 8) disposés sur le plateau de travail (7) et/ou sur la paroi (4) délimitant la surface de chargement ouverte, sont reliés de manière amovible au dispositif de fixation (2).

10. Banc mobile (1) selon l'une des revendications précédentes, **caractérisé en ce que** le plateau de travail (7) présente au moins un dispositif de retenue pour les machines courantes du commerce, un étau ou similaire.
